# FASCICULE DE BREVET EUROPEEN

(11) **EP 0 524 464 B1**
(45) Date de publication et mention de la délivrance du brevet: **04.10.1995**
(21) Numéro de dépôt: 92111246.2
(22) Date de dépôt: 02.07.1992
(51) Int. Cl.: B65D 81/00, B65B 29/02

(54) **Cartouche souple pour café avec élément rigidifiant et son procédé de fabrication**
Flexible Kaffeekassette mit einem versteifenden Element und Verfahren zu ihrer Herstellung
Flexible coffee cartridge with a rigidifying element and method of manufacturing the same

(30) Priorité: 05.07.1991 EP 91111214
(43) Date de publication de la demande: 27.01.1993
(73) Titulaire: SOCIETE DES PRODUITS NESTLE S.A., 1800 Vevey (CH)
(72) Inventeur: Fond, Olivier, CH-1400 Yverdon (CH); Masek, Petr, CH-1400 Yverdon (CH)

(56) Documents cités:
- FR-A- 2 617 389

## Description

L'invention a trait à un emballage sous forme de cartouche souple ouverte ou fermée pour la confection d'une boisson adaptée aux machines d'extraction par fluide sous pression selon le préambule de la revendication 1 et à son procédé de fabrication.

L'utilisation de cartouches pour la préparation d'une boisson à partir d'une substance pulvérulente, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction.

Ces cartouches se présentent sous deux versions principales: ouvertes, avec les faces supérieure et inférieure perméables afin de laisser passer le fluide d'extraction, ou fermées, s'ouvrant automatiquement dans le dispositif d'extraction.

Afin de conserver la qualité du café en le protégeant contre l'humidité et l'oxygène, les cartouches ouvertes doivent être suremballées dans des sachets étanches ou présenter des opercules pelables étanches sur les deux faces. Les cartouches fermées sont, quant à elles, réalisées avec des matériaux étanches.

Afin de satisfaire aux législations des divers pays concernant le recyclage des matériaux d'emballage, un nouveau concept de cartouche doit pouvoir être réalisé avec plusieurs matériaux différents (papier, carton, aluminium, plastique), la cartouche étant ouverte ou fermée.

D'autre part, pour satisfaire également à des contraintes économiques et commerciales, ces différentes versions de cartouches devraient pouvoir être fabriquées sur les mêmes machines de conditionnement et être extraites sur les mêmes machines d'extraction.

Enfin, afin de réduire la consommation de matières pour la fabrication des cartouches, celles-ci doivent être simplifiées. Ceci peut être obtenu, par exemple, en éliminant le filtre à la base de la cartouche.

L'utilisation, dans un souci écologique ou économique, de matières souples de faible épaisseur et/ou imperméables à l'oxygène pour la fabrication de cartouches, contenant par exemple du café moulu et destinées à être extraites sous pression d'eau chaude, se heurte en général au problème qui est de donner et surtout de maintenir après manipulation, transport et stockage une forme déterminée à ces cartouches permettant une extraction correcte de la substance pulvérulente.

Or, pour obtenir une bonne extraction de ces cartouches, celles-ci doivent épouser parfaitement la forme intérieure du dispositif d'extraction afin d'éviter tout passage préférentiel de l'eau en dehors du lit, par exemple de café.

Un procédé relatif à l'extraction de capsules en matériaux souples est décrit, par exemple dans les brevets FR 1.537.031 et FR 2.033.190. Ce procédé présente de nombreux désavantages.

Il est tout d'abord complexe à réaliser car les faces supérieure et inférieure de la cavité du dispositif destiné à recevoir la capsule sont pourvues d'une multitude de saillies et de trous.

De plus, ce procédé ne peut être fiable et reproductible, car il est impossible de réaliser sous l'effet de la pression d'eau toutes les ouvertures souhaitées. En effet, dès qu'une ou plusieurs ouvertures ont été obtenues, la pression chute dans la capsule puisque le liquide peut s'écouler.

En conséquence, le nombre et la position des ouvertures sont aléatoires. Cette situation peut entraîner une mauvaise extraction du lit de la substance car, le filtre étant plaqué contre la face inférieure, le drainage de ce dernier n'est pas assuré sur toute la surface. L'extraction est incomplète et hétérogène du fait de l'existence de zones avec passages préférentiels et de zones mal irriguées et drainées.

De plus, un tel procédé n'est pas hygiénique. En effet, étant donné la multitude d'orifices pour le passage de l'eau et la température élevée du dispositif, des dépôts de matières organiques difficiles à éliminer doivent immanquablement s'effectuer.

Par suite, ce procédé peut être sensible au colmatage car les dépôts successifs de matières organiques dans la multitude de petits orifices peuvent contribuer à une obstruction progressive de ces derniers. Dans ces conditions, la qualité et la régularité des extractions s'en trouveront encore plus affectées.

Enfin, ce procédé est employé avec une cartouche contenant une substance de base pulvérulente ou liquide. Dans le cas du café, il ne peut s'agir que d'un café soluble devant être dissout par l'eau ou d'un café liquide concentré devant être dilué par l'eau. Ce procédé et cette cartouche ne sont pas utilisables dans le cas d'un café moulu.

On connaît également dans FR-A-2617389 une cartouche tronconique pourvue d'un fond filtrant et fermée par des opercules sur le dessus et sur le fond. Une telle cartouche est constituée de cinq pièces et par la suite sa fabrication comporte un grand nombre d'opérations dont deux soudures.

Le but de la présente invention est de réaliser une cartouche ouverte ou fermée, de disposition tronconique, tronconique inversée ou hémisphérique, constituée en prédominance de matériaux souples, qui garde sa forme originelle notamment pendant l'extraction, de sorte que l'extraction ait lieu correctement par passage du fluide d'extraction sans chemins préférentiels à travers le lit de substance pulvérulente et qui peut être extraite dans les machines espresso classiques moyennant un dispositif d'adaptation simple ou sans un tel dispositif.

Par ailleurs, on désire que l'emballage comporte peu de pièces et soit de fabrication simple.

L'emballage selon l'invention est constitué d'un corps en forme de cavité tronconique, tronconique inversée ou hémisphérique pourvue d'un rebord, contenant une substance pulvérulente pour la confection d'une boisson et d'une membrane appliquée sur le rebord du corps.

Il est caractérisé par le fait qu'il comporte un élément rigidifiant complémentaire indépendamment du corps, que ledit élément est annulaire ou circulaire si l'élément rigidifiant est la membrane permettant, lors de l'extraction, par l'adaptation exacte de la cavité au dispositif d'extraction, la circulation du fluide d'extraction au travers du lit de substance pulvérulente.

L'intérêt de cette cartouche, dans sa version fermée, est qu'elle ne comprend pas à proprement parler de filtre.

Selon un premier mode de réalisation, l'élément rigidifiant est constitué d'une chemise tronconique pourvue d'un rebord venant s'appliquer sur le rebord du corps. La cartouche comprend trois pièces, un corps, une chemise et une membrane.

La chemise a pour effet de rigidifier le corps de la cartouche mais peut aussi couvrir une grande partie de la membrane. Néanmoins, la chemise ne peut recouvrir totalement la membrane car elle doit tout de même permettre le passage de l'aiguille d'injection prévue dans certains dispositifs d'extraction.

Cette chemise peut être placée à l'intérieur ou à l'extérieur du corps de la cartouche.

Dans ce premier cas, si le rebord de la chemise est de la même taille que ceux du corps et de la membrane, la chemise est soudée sur ses deux faces contre eux. Si le rebord de la chemise est plus court que celui du corps et de la membrane, la chemise peut être soudée sur ses deux faces contre eux mais, de toute façon, le corps et la membrane se trouvent en partie soudés directement l'un contre l'autre.

Si la chemise est en matière plastique, son interposition entre le corps et la membrane de la cartouche peut jouer le rôle d'un joint fusif qui favorise l'étanchéité de la cartouche, dans sa version fermée.

Dans le cas où la chemise est disposée à l'extérieur, celle-ci peut être soudée sur son rebord à celui du corps. La membrane peut être de diamètre égal ou supérieur à celui du corps. La membrane est toujours soudée contre le rebord du corps, mais, si ce dernier est plus court, la membrane peut être aussi soudée, en partie, directement contre la chemise.

Selon une autre configuration, des ailettes saillantes peuvent être intégrées à la chemise de la cartouche. Cette chemise, en matière plastique injectée, présente des ailettes d'ouverture sur sa face inférieure, la disposition de la cartouche étant alors tronconique inversée.

Les ailettes d'ouverture intégrées au fond de la chemise sont saillantes, mais ni taillantes ni perforantes directement . La déchirure de la paroi inférieure de la cartouche au contact des éléments saillants n'est rendue possible que parce qu'ils permettent à celle-ci d'atteindre sa tension de rupture lors de la déformation sous la poussée d'air et d'eau. Les ailettes sont constituées de petites baguettes, rectilignes ou sinueuses ou sous forme d'arc, de section circulaire plus ou moins aplatie ou légèrement évasée vers le bas, disposées de façon radiale, concentrique, parallèle ou perpendiculaire sur la grille d'écoulement du dispositif d'extraction et présentant des longueurs distinctes.

La disposition de ces ailettes a été optimisée afin de permettre une répartition homogène des zones d'écoulement de l'extrait c'est-à-dire une meilleure irrigation, donc une meilleure extraction du lit de substance pulvérulente et une meilleure qualité de l'extrait obtenu.

Ces éléments sont de longueur variable, selon leur position sur le fond de la cartouche, selon le diamètre de la face inférieure et selon la matière du corps. Leur section est semi-circulaire, plus ou moins aplatie, plus ou moins évasée vers la bas. Leur diamètre moyen varie de préférence de 0,5 à 5,0 mm. Leur section peut aussi être conique ou tronconique.
Leur nombre peut varier de 4 à 16 selon le diamètre de la face inférieure.

Dans la version ouverte, le corps et la membrane de la cartouche peuvent être réalisés à l'aide de matières telles que du papier-filtre ou des fibres de matière plastique non tissées. La cartouche est alors suremballée dans un sachet étanche à l'oxygène et à la vapeur d'eau afin de lui assurer une durée de conservation suffisante jusqu'à l'utilisation.

Afin de renforcer la rigidité de la cartouche, la paroi de la chemise et celle du corps peuvent être gaufrées et se présenter sous forme de nervures annulaires concentriques.

Selon une variante, la chemise peut être ajourée et présenter des fenêtres dans sa paroi annulaire par souci d'économie de matière.

Dans un second mode de réalisation, relatif à une cartouche de forme tronconique, tronconique inversée ou hémisphérique, l'élément rigidifiant est une rondelle appliquée sur le rebord du corps, la cartouche comprenant également trois pièces.

Selon un troisième mode de réalisation d'une cartouche de forme tronconique inversée, l'élément rigidifiant est constitué d'une bague tronconique à la grande base du tronc de cône du corps prolongée par un rebord dans le sens radial externe, la cartouche comprenant aussi trois pièces dans ce cas.

Dans un quatrième mode de réalisation, l'élément rigidifiant est la membrane elle-même, la cartouche étant alors constituée de deux pièces. La membrane peut être perforée dans la version ouverte de la cartouche qui est alors de forme tronconique ou tronconique inversée, perforée dans la version fermée qui est tronconique inversée, la perforation ayant alors lieu au moyen d'une aiguille creuse, par exemple.

Dans des réalisations particulières des second et troisième modes précédents, adaptables à différentes grandeurs de dispositif d'extraction, le corps de la cartouche est souple et déformable latéralement et longitudinalement , ce qui permet l'extension de la cartouche lors de l'extraction. Une telle cartouche peut être extraite dans la plupart des machines espresso du commerce sans nécessiter d'adaptateur.

Dans la version ouverte, la cartouche peut présenter un fond perforé dans la partie centrale. Les ouvertures peuvent être béantes, par exemple des trous permanents en apparence formés dans la paroi par des aiguilles chaudes ou se refermer en apparence dans le cas de fentes. Dans ce dernier cas, l'extraction peut avoir lieu au moyen d'un porte-cartouche spécifique disposant d'ailettes sur la grille d'écoulement. Sous l'effet de la pression, la matière se déforme au niveau des ailettes et les fentes pratiquées dans le fond de la capsule s'agrandissent afin de permettre l'écoulement de l'extrait. Dans le cas de café moulu, il y a ainsi un effet préalable de montée en pression, de compactage et de mouillage du café.

Selon la qualité d'imperméabilité du matériau à l'oxygène, la cartouche peut être emballée telle quelle lorsqu'elle est fermée ou éventuellement sur-emballée dans des sachets eux-mêmes étanches à l'oxygène et permettant une conservation de 6 à 12 mois. Dans ce dernier cas, les cartouches peuvent être regroupées par unités, par exemple de 2 à 10, car, étant fermées, elles ont par elles-mêmes une autonomie de conservation de quelques jours, par exemple de 2 à 15 jours, une fois le sachet ouvert.

La cartouche est constituée de deux ou trois pièces, un corps souple et une membrane rigide ou un corps et une membrane souples et un élément rigidifiant. Le corps est tronconique ou tronconique inversé. La section du corps est arrondie, c'est-à-dire qu'elle peut être circulaire, ovale ou polygonale à bords arrondis.

La cartouche selon l'invention peut être extraite avec le dispositif comportant une grille faisant l'objet de la demande de brevet européen No 91107462 de la demanderesse. La cartouche peut être également extraite dans une machine à café de type espresso classique moyennant un adaptateur spécifique tel que décrit dans les demandes de brevet européen déposées le même jour que la présente demande par la demanderesse sous les Nos 91111210, 91111211 et 91111212.

Dans les réalisations adaptables mentionnées précédemment où le corps est déformable et extensible, l'extraction peut être réalisée sans modification des pièces du dispositif d'extraction, c'est-à-dire qu'elle ne nécessite pas d'adaptateur.

Les dispositifs d'extraction, objets de ces demandes de brevet, permettent d'extraire dans de bonnes conditions cette cartouche simplifiée. La cartouche s'ouvre automatiquement dans le dispositif et après usage, peut être retirée facilement et intégralement avec un minimum de déchet de marc ou de matière d'emballage.

L'invention concerne en outre un procédé de fabrication de l'emballage, dans lequel on thermoforme ou on emboutit le corps de la cartouche présentant un rebord dans un premier film, on remplit le corps ainsi formé avec une composition pulvérulente pour boisson sous un courant de gaz inerte, puis on scelle la membrane formée à partir d'un second film sur le corps de la cartouche.

Le procédé est caractérisé par le fait que l'on place un élément rigidifiant annulaire ou circulaire si l'élément rigidifiant est la membrane, au niveau du rebord du corps, que l'on scelle avec le corps et le cas échéant avec la membrane.

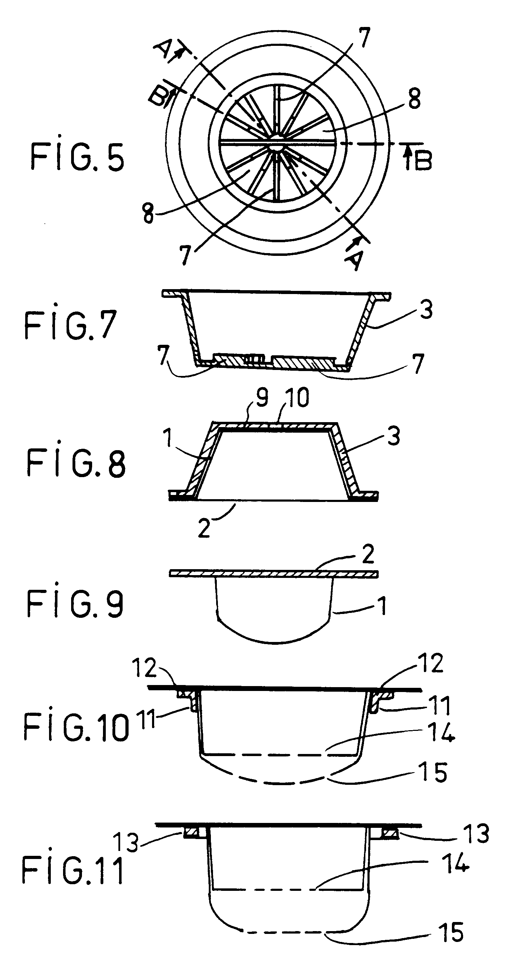

L'invention sera mieux comprise à l'aide de la description ci-après relative à différentes variantes de cartouches données à titre d'exemple par référence aux dessins annexés dans lesquels:
les figures 1,2,3 et 4 sont des coupes schématiques médianes de différentes cartouches de forme tronconique ou tronconique inversée avec chemise,
la figure 5 est une vue de dessus de la chemise d'une cartouche tronconique inversée avec ailettes d'ouverture intégrées à la chemise,
les figures 6 et 7 sont respectivement une coupe selon AA de la cartouche associée à la chemise de la figure 5 et une coupe selon BB de la chemise de la figure 5.
La figure 8 est une coupe schématique médiane d'une cartouche de forme tronconique,
la figure 9 est une coupe schématique médiane d'une cartouche avec élément rigidifiant circulaire constitué par la membrane,
les figures 10 et 11 sont des coupes schématiques médianes de cartouches avec bague (fig.10) ou rondelle (fig.11) annulaires rigidifiantes et
les figures 12 à 15 sont des représentations schématiques du procédé de fabrication des cartouches.

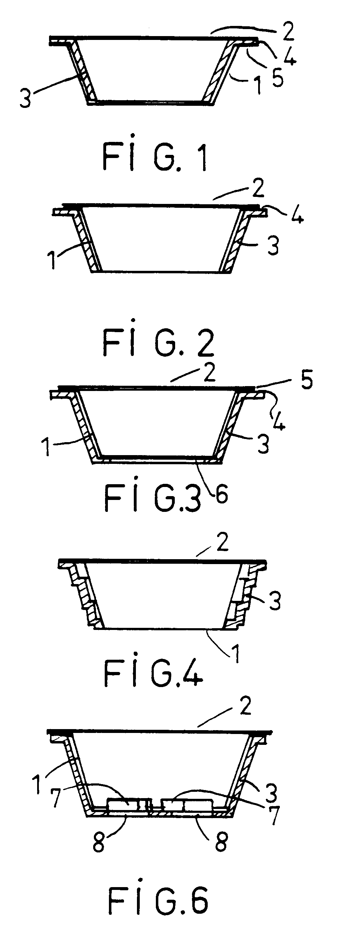

Dans les figures 1 à 4, le corps 1 et la membrane 2 de la cartouche sont constitués de feuilles minces souples.
La chemise 3 est de forme tronconique adaptée au corps à paroi épaisse rigide. Elle est à l'intérieur (fig.1) ou à l'extérieur (fig.2) du corps et comporte un rebord 4 scellé sur le rebord 5 du corps.
A la figure 3, la chemise 3 recouvre partiellement le fond 6 du corps à la périphérie. La chemise 3 est gaufrée dans la version de la figure 4 pour augmenter sa rigidité.
La cartouche représentée aux figures 5,6 et 7 comprend des ailettes radiales 7 de différentes longueur intégrées au fond ajouré 8 de la chemise 3.

Dans la cartouche de la figure 8, de forme tronconique, la chemise 3 recouvre presque entièrement la face supérieure 9 du corps, mais en ménageant une ouverture centrale 10 pour le passage de l'aiguille creuse du dispositif d'extraction.

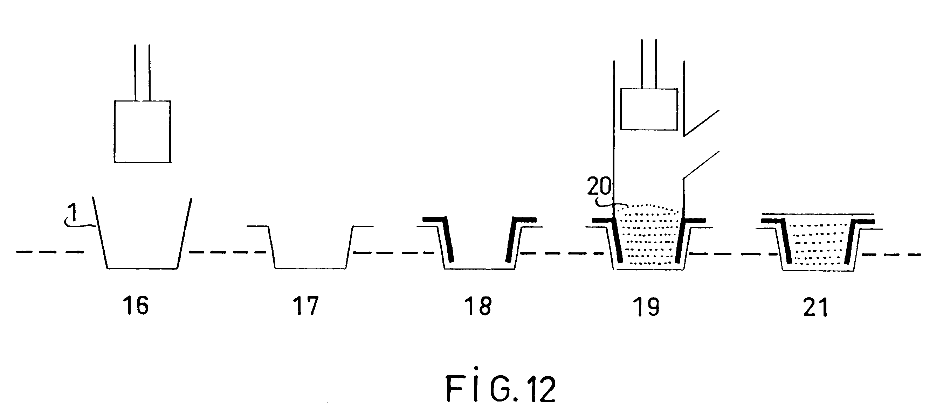

Dans les versions des figures 9 relative à une cartouche fermée, 10 et 11 relatives à des cartouches ouvertes, l'élément rigidifiant est soit la membrane 2 (fig.9), soit une bague annulaire 11 tronconique située à la grande base du tronc de cône du corps 1, prolongée par un rebord 12 dans le sens radial externe (fig.10), soit une rondelle large 13 sur le rebord du corps. Dans les versions des fig. 10 et 11, les cartouches sont extensibles en diamètre et en hauteur de manière à être utilisables dans la plupart des machines espresso du commerce sans modification des portes-filtres des machines. Ces cartouches sont ouvertes, c'est-à-dire que les parois souples du corps et de la membrane présentent des perforations 14 et 15.

Dans une variante non représentée, une cartouche fermée peut comporter comme élément rigidifiant une bague ou une rondelle telles que décrites précédemment.

Les cartouches des figures 1 à 9 peuvent être du type ouvertes ou fermées.

Dans la version fermée, les parois minces du corps 1 et de la membrane 2 peuvent être constituées des matériaux suivants constitutifs d'une couche barrière:
- aluminium, de préférence de 20 à 50 µm d'épaisseur avec laque thermosoudable,
- complexe multi-couches en matière plastique, par exemple polyéthylène, polypropylène, polyamide, polystyrène ou polyester et matière plastique étanche à l'oxygène par exemple copolymène d'alcool vinylique et d'éthylène le cas échéant chargé de silice ou métallisé ou polychlorure de vinylidène,
- multi-couches d'aluminium, de préférence de 8 à 20 µm d'épaisseur, de papier de grammage 20 à 60g/m2 et d'une matière plastique telle que mentionnée précédemment de préférence de 20 à 60 µm d'épaisseur.

La chemise de paroi épaisse (fig.1-8) ou la membrane épaisse (fig.9) peut être en matière plastique telle que mentionnée précédemment thermoformée ou injectée, par exemple de 0,3 à 1 mm d'épaisseur. Elle peut être en multicouches de carton, par exemple de grammage 100 à 300 g/m2 et d'une matière plastique telle que mentionnée précédemment de 20 à 60 µm d'épaisseur.

Dans la version ouverte, le corps 1 et la membrane 2 peuvent être par exemple en papier filtre ou complexe de polyester ou polypropylène perforé ou tissé ou non tissé, par exemple de grammage 15 à 40 g/m2. La chemise 3, et la membrane 2 de paroi épaisse est en un matériau tel qu'indiqué ci-dessus.
Dans le cas d'un élément rigidifiant du type bague ou rondelle, par exemple représenté aux figures 10 et 11, les parois minces du corps 1 et de la membrane 2 sont en matière plastique telle que mentionnée précédemment mais sans couche barrière et sont perforées (dans le cas des fig. 10 et 11). Le corps 1 et la membrane 2 peuvent également être en papier filtre ou en fibres plastiques tissées ou non tissées. Les éléments rigidifiants plus épais sont, soit en matière plastique, soit en carton ou multi-couches matière plastique-carton.

Dans les versions des fig. 1 à 9, on peut intercaler une couche de papier filtre ou de fibres de matière plastique tissées ou non tissées entre la substance à extraire et la paroi interne inférieure de la cartouche de manière à éliminer complètement les risques de dispersion du marc après l'extraction. Cette couche peut être liée ou non à la dite paroi.

Tel que montré à la figure 12, le procédé de fabrication d'une cartouche comprend les étapes suivantes:

En 16, on emboutit le corps 1 au moyen d'un poinçon et d'une matrice et on plie le rebord en 17.

En 18, on dépose la chemise préalablement fabriquée par thermoformage, injection ou formage à l'intérieur de la cavité ainsi formée.

En 19, on dose et on tasse du café moulu 20,
puis en 21 on soude la membrane sur le rebord de la chemise et cette dernière sur le rebord du corps. Les opérations de dosage, tassage et soudage de la membrane s'effectuent sous azote. Un tel procédé est applicable à la fabrication de la cartouche de la figure 1.

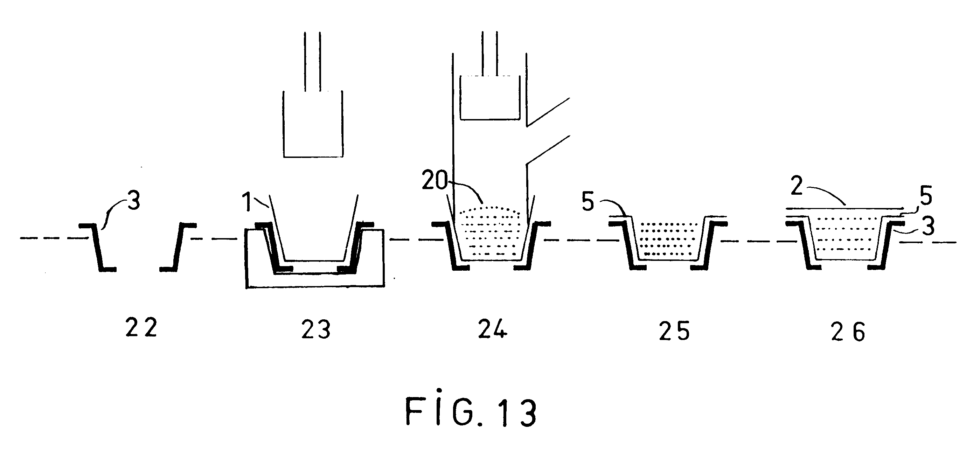

A la figure 13, on forme en 22 la chemise 3 par thermoformage ou injection si elle est en matière plastique ou par formage si elle est en carton, par exemple. Au poste 23, on emboutit le corps 1 à l'intérieur de la chemise préalablement déposée dans une matrice. En 24, on dose et on tasse du café moulu 20, puis on plie le rebord 5 du corps en 25. En 26, on soude la membrane 2 sur le rebord 5 du corps ainsi que le rebord 5 avec la chemise 3. Dans une variante non représentée, on peut, au lieu de former le corps dans la chemise 3, placer au fond de celle-ci un opercule que l'on soude, puis doser le café et souder la membrane. Les opérations de dosage, tassage et soudage de la membrane s'effectuent sous azote. Le procédé illustré s'applique à la fabrication des cartouches des figures 2,3,4,6 et 8.

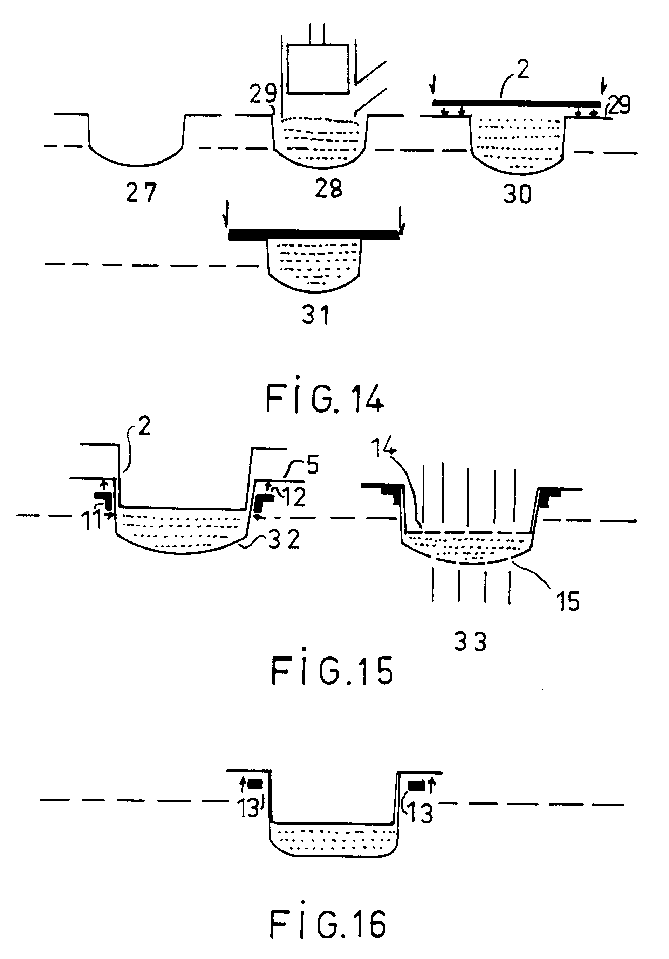

A la figure 14, le procédé comprend le thermoformage du corps en 27, le dosage, puis le tassage en 28 du café jusqu'au rebord 29, puis en 30 la découpe de la membrane épaisse 2 et son soudage sur le rebord 29. Au poste 31, on découpe la cartouche.

Comme illustré à la figure 15, le procédé diffère uniquement du procédé représenté à la figure 14 en ce que l'on thermoforme le corps 32, puis on soude sur le corps une bague annulaire de renfort 11,12, on remplit et on tasse le café, puis on soude la membrane 2 préalablement thermoformée sur le rebord 5 du corps. On peut bien entendu à l'inverse appliquer sur le rebord du corps la partie radiale externe de la bague et souder préalablement ou ultérieurement la membrane. Au poste 33, on perfore ensuite le fond du corps et la membrane dans leur partie centrale (14,15).

A la figure 16, le procédé est mis en oeuvre comme à la figure 15, mis à part le fait que l'on applique une rondelle de renfort 13 sur une partie du rebord du corps.

Dans toutes les versions présentées dans ce texte, la cartouche selon l'invention peut être de taille variable suivant le volume de boisson que l'on souhaite préparer. Par exemple, la dose de café contenue peut varier entre 5 et 20 g, le diamètre de la cartouche est compris entre 2,5 et 8 cm et l'épaisseur du lit de café entre 10 et 25 mm.

La cartouche est remplie d'une composition pulvérulente pour la préparation d'une boisson. Cette substance est de préférence du café torréfié et moulu, mais peut être aussi du thé, du café soluble, un mélange de café moulu et de café soluble ou un produit chocolaté.

Dans tous les cas, le fluide d'extraction sera dirigé en un flux vertical de manière à traverser tout le lit de composition pulvérulente sans risque de création de flux d'écoulement latéral.

## Revendications

1. Emballage sous forme de cartouche souple ouverte ou fermée pour la confection d'une boisson, adaptée aux machines d'extraction par fluide sous pression, constitué d'un corps (1) en forme de cavité tronconique, tronconique inversée ou hémisphérique pourvue d'un rebord, contenant une substance pulvérulente pour la confection d'une boisson, fermé par une membrane (2) appliquée sur le rebord (5) du corps (1), caractérisé par le fait qu'il comporte un élément rigidifiant (3) complémentaire indépendamment du corps (1), que ledit élément (3) est annulaire ou circulaire si l'élément rigidifiant est la membrane (2) permettant, lors de l'extraction, par l'adaptation exacte de la cavité au dispositif d'extraction, la circulation du fluide d'extraction au travers du lit de substance pulvérulente.

2. Emballage selon la revendication 1, caractérisé par le fait que l'élément rigidifiant (3) est constitué d'une chemise tronconique placée à l'intérieur ou a l'extérieur du corps.

3. Emballage selon la revendication 1, caractérisé par le fait que le corps (1) est de forme tronconique ou tronconique inversée et que l'élément rigidifiant (3) est une rondelle appliquée sur le rebord (5) du corps (1) ou une bague tronconique (11) à la grande base du tronc de cône du corps (1) prolongée par un rebord (12) dans le sens radial externe.

4. Emballage selon la revendication 1, caractérisé par le fait que le corps est tronconique inversé ou hémisphérique et que l'élément rigidifiant (3) est la membrane (2).

5. Emballage selon la revendication 3, caractérisé par le fait que le corps (1) est déformable de manière que la cartouche s'adapte à différents dispositifs d'extraction.

6. Emballage selon la revendication 2, caractérisé par le fait que la cartouche est tronconique inversée et que l'élément rigidifant (3) en forme de chemise présente des ailettes (7) saillantes d'ouverture sur sa face inférieure.

7. Procédé de fabrication d'une cartouche selon la revendication 1, dans lequel on thermoforme ou on emboutit le corps (1) de la cartouche présentant un rebord (5) dans un premier film, on remplit le corps (1) ainsi formé avec une composition pulvérulente pour boisson sous un courant de gaz inerte, puis on scelle la membrane (2) formée à partir d'un second film sur le corps (1) de la cartouche, caractérisé par le fait que l'on place un élément rigidifiant (3) au niveau du rebord (5) du corps (1) que l'on scelle avec le corps (1) et le cas échéant avec la membrane (2).

8. Procédé selon la revendication 7, caractérisé par le fait que l'on crée l'élément rigidifiant (3) préalablement à ou séparément de la mise en forme du corps (1).

9. Procédé selon la revendication 7, caractérisé par le fait que, pour réaliser une cartouche ouverte, on perfore le fond du corps (1) et la membrane (2).

10. Procédé selon la revendication 7, caractérisé par le fait que l'on crée des fentes dans la partie centrale du fond (8) de la cartouche et que l'extraction a lieu au moyen d'un porte-cartouche disposant d'ailettes sur la grille d'écoulement, que les fentes se referment en apparence et s'agrandissent sous l'effet de la pression du fluide lors l'extraction, la matière du fond se déformant au niveau des ailettes de sorte que l'on réalise ainsi une montée en pression, un compactage et un mouillage de la substance pulvérulente préalablement à l'écoulement de l'extrait.

## Claims

1. A pack in the form of an open or closed flexible cartridge for the preparation of a beverage adapted to extraction machines operating by fluid under pressure, consisting of a body (1) in the form of a frustoconical, inverted frustoconical or hemispherical cavity which is provided with a rim and which contains a powder-form substance for the preparation of a beverage, being closed by a membrane (2) applied to the rim (5) of the body (1), characterized in that it comprises a complementary stiffening element (3) independent of the body (1) and in that the element (3) is annular or, if the stiffening element is the membrane (2), is circular so that the extraction fluid is able to circulate through the layer of powder-form substance during extraction through exact adaptation of the cavity to the extraction machine.

2. A pack as claimed in claim 1, characterized in that the stiffening element (3) is formed by a frustoconical jacket disposed on the inside or outside of the body.

3. A pack as claimed in claim 1, characterized in that the body (1) is in the form of a frustum or inverted frustum and in that the stiffening element (3) is a ring applied to the rim (5) of the body (1) or a frustoconical collar (11) at the major base of the frustum of the body (1) extended by a rim (12) in the outer radial direction.

4. A pack as claimed in claim 1, characterized in that the body is in the form of an inverted frustum or hemisphere and in that the stiffening element (3) is the membrane (2).

5. A pack as claimed in claim 3, characterized in that the body (1) is deformable so that the cartridge adapts itself to different extraction systems.

6. A pack as claimed in claim 2, characterized in that the cartridge is an inverted frustum and in that the stiffening element (3) in the form of a jacket comprises projecting opening ribs (7) on its lower face.

7. A process for the production of the cartridge claimed in claim 1, in which the body (1) of the cartridge comprising a rim (5) is thermoformed or stamped from a first film, the body (1) thus formed is filled with a powder-form composition for a beverage in a stream of inert gas, after which the membrane (2) formed from a second film is sealed to the body (1) of the cartridge, characterized in that a stiffening element (3) is placed on the rim (5) of the body (1) and sealed to the body (1) and optionally to the membrane (2).

8. A process as claimed in claim 7, characterized in that the stiffening element (3) is formed before or separately from shaping of the body (1).

9. A process as claimed in claim 7, characterized in that, to make an open cartridge, the base of the body (1) and membrane (2) are perforated.

10. A process as claimed in claim 7, characterized in that slots are formed in the central part of the base (8) of the cartridge and in that extraction is carried out by means of a cartridge holder formed with ribs on the flow grill, in that the slots are closed in appearance and become larger under the pressure of the fluid during extraction, the material of the base deforming at the ribs so that an increase in pressure is established and the powder-form substance is compacted and wetted before the flow of the extract.

## Patentansprüche

1. Verpackung in Form einer an die Maschinen zum Aufbrühen mit Hilfe von Druckfluid angepaßten biegsamen, offenen oder geschlossenen Portionspackung, die aus einem Körper (1) in Form eines mit einem abgewinkelten Rand versehenen kegelstumpfförmigen, umgekehrt kegelstumpfförmigen oder halbkugelförmigen Hohlraums besteht, der eine pulverförmige Substanz für die Zubereitung eines Getränks enthält und durch eine auf dem angewinkelten Rand (5) des Körpers (1) aufgelegte Membran (2) geschlossen ist, dadurch gekennzeichnet, daß sie ein vom Körper getrenntes zusätzliches Versteifungselement (3) besitzt, daß dieses Element (3) ringförmig oder kreisförmig ist, wenn das Versteifungselement die Membran (2) ist, die beim Aufbrühen durch genaue Anpassung des Hohlraums an die Aufbrühvorrichtung den Umlauf des Aufbrühfluids durch das Bett der pulverförmigen Substanz gestattet.

2. Verpackung nach Anspruch 1, dadurch gekennzeichnet, daß das Versteifungselement (3) aus einem kegelstumpfförmigen Mantel besteht, der innerhalb oder außerhalb des Körpers angeordnet ist.

3. Verpackung nach Anspruch 1, dadurch gekennzeichnet, daß der Körper (1) kegelstumpfförmig oder umgekehrt kegelstumpfförmig ist und daß das Versteifungselement (3) eine an den angewinkelten Rand (5) des Körpers (1) angelegte Scheibe oder ein kegelstumpfförmiger Ring (11) an der großen Basis des Kegelstumpfes des Körpers (1) ist, der durch einen abgewinkelten Rand (12) in der radialen Richtung nach außen verlängert ist.

4. Verpackung nach Anspruch 1, dadurch gekennzeichnet, daß der Körper umgekehrt kegelstumpfförmig oder halbkugelförmig ist und daß das Versteifungselement (3) die Membran (2) ist.

5. Verpackung nach Anspruch 3, dadurch gekennzeichnet, daß der Körper (1) so verformbar ist, daß die Portionspackung sich an verschiedene Aufbrühvorrichtungen anpaßt.

6. Verpackung nach Anspruch 2, dadurch gekennzeichnet, daß die Portionspackung umgekehrt kegelstumpfförmig ist und daß das Versteifungselement (3) in Form eines Mantels vorstehende Öffnungsrippen (7) auf seiner Unterseite aufweist.

7. Verfahren zur Herstellung einer Portionspackung nach Anspruch 1, bei welchem man den einen abgewinkelten Rand (5) aufweisenden Körper (1) der Portionspackung in einer ersten Folie warmformt oder tiefzieht, den so geformten Körper (1) mit einer pulverförmigen Zusammensetzung für ein Getränk unter einem Inertgasstrom füllt und dann die aus einer zweiten Folie geformte Membran (2) auf dem Körper (1) der Portionspackung versiegelt, dadurch gekennzeichnet, daß man in Höhe des abgewinkelten Rand (5) des Körpers (1) ein Versteifungselement (3) anordnet, das man mit dem Körper (1) und ggf. mit der Membran (2) versiegelt.

8. Verfahren nach Anspruch 7, dadurch gekennzeichnet, daß man das Versteifungselement (3) vor oder getrennt von der Formung des Körpers (1) herstellt.

9. Verfahren nach Anspruch 7, dadurch gekennzeichnet, daß man zur Herstellung einer offenen Portionspackung den Boden des Körpers (1) und die Membran (2) perforiert.

10. Verfahren nach Anspruch 7, dadurch gekennzeichnet, daß man im zentralen Teil des Bodens (8) der Portionspackung Schlitze herstellt und daß das Aufbrühen mit Hilfe eines Portionspackungshalters stattfindet, der auf dem Ablaufrost über Rippen verfügt, daß die Schlitze sich scheinbar schließen und unter der Einwirkung des Drucks des Fluids beim Aufbrühen größer werden, wobei der Werkstoff des Bodens sich in Höhe der Rippen verformt, so daß man einen Druckanstieg, eine Verdichtung und eine Benetzung der pulverförmigen Substanz vor dem Abfließen des Extrakts bewirkt.
